# EUROPÄISCHE PATENTANMELDUNG

(11) **EP 2 500 788 A1**
(43) Veröffentlichungstag der Anmeldung: **19.09.2012**
(21) Anmeldenummer: 11158177.3
(22) Anmeldetag: 15.03.2011
(51) Int. Cl.: G05B 19/05, G05B 23/02, H04L 29/06, H04L 12/24

(54) **Verfahren zum Verarbeiten von Meldungen in einem Kommunikationsnetz einer industriellen Automatisierungsanlage**

(71) Anmelder: SIEMENS AKTIENGESELLSCHAFT, 80333 München (DE)
(72) Erfinder: Koppers, Joachim, 91301, Forchheim (DE)

(57) **Zusammenfassung**

Verfahren zum Verarbeiten von Meldungen in einem Kommunikationsnetz einer industriellen Automatisierungsanlage

Die Erfindung betrifft ein Verfahren zum Verarbeiten von Nachrichten in einem Kommunikationsnetz einer industriellen Automatisierungsanlage, wobei das Kommunikationsnetz ein erstes Ethernet-basiertes Protokoll zur Kommunikation in der industriellen Automatisierung verwendet und wobei in dem Kommunikationsnetz ein Datenaustausch zwischen einer Anzahl von einen Automatisierungsprozess ausführenden Feldgeräten (F1, F2) und einem der Anzahl von Feldgeräten (F1, F2) zugeordneten Steuergerät (CO) erfolgt, welches den Automatisierungsprozess steuert. In dem erfindungsgemäßen Verfahren wird im Falle einer von einem Feldgerät (F1, F2) erfassten Störung in der Automatisierungsanlage ein Alarm (A1, A2) basierend auf dem ersten Protokoll von dem Feldgerät (F1, F2) an das dem Feldgerät zugeordnete Steuergerät (CO) übermittelt, wobei der Alarm (A1, A2) als Netzwerk-Alarm (A1) klassifiziert wird, falls er durch eine Störung im Kommunikationsnetz verursacht ist. Anschließend wandelt das Steuergerät (CO) als Netzwerk-Alarm (A1) klassifizierten Alarm in eine Meldung (M) eines zweiten, zur Verwaltung des Kommunikationsnetzes vorgesehenen Protokolls und leitet die Meldung (M) zur Weiterverarbeitung an eine Netzverwaltungsstation (NMS) in dem Kommunikationsnetz weiter.

## Beschreibung

Verfahren zum Verarbeiten von Meldungen in einem Kommunikationsnetz einer industriellen Automatisierungsanlage

Die Erfindung betrifft ein Verfahren zum Verarbeiten von Meldungen in einem Kommunikationsnetz einer industriellen Automatisierungsanlage.

Zur Kommunikation zwischen den verschiedenen Komponenten in einer industriellen Automatisierungsanlage sind aus dem Stand der Technik verschiedene Standards bzw. Protokolle bekannt. In der Regel verwenden diese Standards die an sich bekannte Ethernet-Technologie. Solche Standards werden oft unter dem Oberbegriff "Industrial Ethernet" zusammengefasst. Eine Variante von "Industrial Ethernet" ist das PROFINET-Protokoll, welches besondere Anforderungen im Rahmen der Verwendung von Ethernet in Automatisierungsanlagen berücksichtigt, wie z.B. das Erfordernis der Echtzeitfähigkeit.

Im Rahmen der Kommunikation basierend auf Industrial Ethernet werden bei Störungen verschiedene Arten von Alarmen ausgegeben, wobei zwischen Netzwerk-Alarmen und Prozess-Alarmen unterschieden wird. Prozess-Alarme sind dabei Störungen, die im Rahmen des von der Automatisierungsanlage durchgeführten Automatisierungsprozesses auftreten. Solche Alarme können an ein Meldesystem (z.B. eine Leitwarte) des Industrial-Ethernet-Kommunikationsnetzes weitergeleitet und dort verarbeitet werden. Demgegenüber beruhen Netzwerk-Alarme auf Störungen im Kommunikationsnetz, welche nicht durch den Automatisierungsprozess bedingt sind. Das oben genannte Meldesystem ist zur Verarbeitung solcher Störungen bzw. Netzwerkereignisse nicht ausgelegt.

Aufgabe der Erfindung ist es deshalb, ein Verfahren zum Verarbeiten von Meldungen in einem Kommunikationsnetz einer industriellen Automatisierungsanlage zu schaffen, welches die Verarbeitung von Netzwerk-Alarmen ermöglicht.

Diese Aufgabe wird durch das Verfahren gemäß Patentanspruch 1 bzw. das Kommunikationsnetz gemäß Patentanspruch 10 bzw. das Steuergerät gemäß Patentanspruch 12 gelöst. Weiterbildungen der Erfindungen sind in den abhängigen Ansprüchen definiert.

Das erfindungsgemäße Kommunikationsnetz verwendet ein erstes Ethernet-basiertes Protokoll zur Kommunikation in der industriellen Automatisierung, d.h. es wird ein auf "Industrial Ethernet" basierendes Protokoll eingesetzt. In einer bevorzugten Variante kommt der oben erwähnte PROFINET-Standard zum Einsatz. In dem Kommunikationsnetz erfolgt dabei ein Datenaustausch zwischen einer Anzahl von an einem Automatisierungsprozess beteiligten Feldgeräten und einem der Anzahl von Feldgeräten zugeordneten Steuergerät, welches den Automatisierungsprozess steuert. Der Begriff des Feldgeräts ist aus der Automatisierungstechnik hinlänglich bekannt und umfasst insbesondere Geräte, die den Automatisierungsprozess unmittelbar beeinflussen (z.B. Sensoren bzw. Aktoren), sowie Geräte, die für eine an den Automatisierungsprozess angepasste Kommunikation zuständig sind (wie z.B. echtzeitfähige Ethernet-Switches). Das Steuergerät ist dabei vorzugsweise eine speicherprogrammierte Steuerung, die auch als SPS bezeichnet wird.

Dem erfindungsgemäßen Verfahren wird somit eine dezentrale Netzwerk-Infrastruktur zugrunde gelegt, in der an sich bekannte Feldgeräte an ein Steuergerät angebunden werden, welches den Automatisierungsprozess der Feldgeräte steuert. Im Kommunikationsnetz sind in der Regel mehrere Steuergeräte mit entsprechend angebundenen Feldgeräten vorgesehen. Das erfindungsgemäße Verfahren kann dabei auf den Datenaustausch zwischen jedem solcher Steuergeräte und angebundenen Feldgeräten angewendet werden.

In Schritt a) des erfindungsgemäßen Verfahrens wird im Falle einer von einem Feldgerät erfassten Störung in der Automatisierungsanlage ein Alarm basierend auf dem ersten Protokoll von dem Feldgerät an das dem Feldgerät zugeordnete Steuergerät übermittelt, wobei der Alarm als Netzwerk-Alarm klassifiziert wird, wenn er durch eine Störung im Kommunikationsnetz verursacht ist. Es besteht dabei die Möglichkeit, dass der Alarm bereits durch das erste Protokoll bei seiner Übermittlung als Netzwerk-Alarm klassifiziert ist. Ebenso ist es möglich, dass die Klassifikation des Alarms als Netzwerk-Alarm erst von dem Steuergerät bei Empfang des Alarms vorgenommen wird. Im Schritt b) des erfindungsgemäßen Verfahrens wandelt das Steuergerät den als Netzwerk-Alarm klassifizierten Alarm in eine Meldung eines zweiten, zur Verwaltung des Kommunikationsnetzes vorgesehenen Protokolls und sendet diese gewandelte Meldung zur Weiterverarbeitung an eine Netzverwaltungsstation in dem Kommunikationsnetz.

Das erfindungsgemäße Verfahren zeichnet sich dadurch aus, dass in geeigneter Weise neben dem auf Industrial Ethernet basierenden ersten Protokoll auch ein zweites Netzwerk-Verwaltungs-Protokoll eingesetzt wird, für das eine geeignete Netzverwaltungsstation definiert ist, die Informationen aus Netzwerk-Alarmen verarbeiten kann. Dabei wird in dem entsprechenden Steuergerät eine Übersetzung- bzw. Wandlungsfunktion integriert, um die Netzwerk-Alarme in geeignete Meldungen des zweiten Netzwerk-Verwaltungs-Protokolls umzusetzen. Diese Übersetzung bzw. Umsetzung ist je nach verwendetem ersten bzw. zweiten Protokoll unterschiedlich, liegt jedoch für einen Fachmann bei Kenntnis der entsprechenden Protokolle im Rahmen von fachmännischem Handeln.

In einer bevorzugten Ausführungsform des erfindungsgemäßen Verfahrens ist bzw. wird der in Schritt a) übermittelte Alarm als Prozess-Alarm klassifiziert, falls er durch eine Störung im von den Feldgeräten ausgeführten Automatisierungsprozess verursacht ist, wobei das Steuergerät in diesem Fall einen als Prozess-Alarm klassifizierten Alarm an eine Diagnosestation (z.B. eine Leitwarte) im Kommunikationsnetz weiterleitet. Auf diese Weise können auch die den Automatisierungsprozess betreffenden Alarme geeignet verarbeitet werden. Analog zum Netzwerk-Alarm kann der Alarm bereits durch das erste Protokoll als Prozess-Alarm bei seiner Übermittlung klassifiziert sein. Ebenso besteht die Möglichkeit, dass der Alarm erst bei Empfang im Steuergerät als Prozess-Alarm klassifiziert wird.

Wir bereits oben erwähnt, wird als erstes Protokoll vorzugsweise das PROFINET-Protokoll eingesetzt. Der Begriff "PROFINET-Protokoll" umfasst dabei die im PROFINET-Standard definierten Übertragungsmechanismen und die hierzu verwendeten Protokolle, welche u.a. das Ethernet-Protokoll beinhalten. In diesem Standard ist es auch bekannt, Alarme in die Kategorien "Prozess-Alarm" bzw. "Netzwerk-Alarm" (auch als Kommunikations-Alarm bezeichnet) einzustufen. Dabei kommt insbesondere PROFINET IO zum Einsatz, welches die dezentrale Anbindung von Feldgeräten an ein Steuergerät unterstützt. Im Rahmen von PROFINET IO werden dabei die Feldgeräte als sog. IO-Devices und die Steuergeräte als sog. IO-Controller bezeichnet.

Als zweites Protokoll, welches zur Netzwerkverwaltung des Kommunikationsnetzes vorgesehen ist, kann ein an sich bekanntes Protokoll zum Einsatz kommen. Vorzugsweise wird ein Protokoll in der Anwendungsschicht (Schicht 7 des OSI-Referenzmodells) verwendet. In einer besonders bevorzugten Variante kommt das SNMP-Protokoll (SNMP = Simple Network Management Protokoll) zum Einsatz. Bei der Verwendung dieses Protokolls wird der Netzwerk-Alarm in einen sog. SNMP-Trap gewandelt, der von dem entsprechenden Steuergerät an eine Netzverwaltungsstation in der Form einer sog. SNMP-Management-Station weitergeleitet wird. Gegebenenfalls können auch andere Protokolle, wie z.B. das Syslog-Protokoll, als zweites Protokoll eingesetzt werden. In diesem Fall ist die im Rahmen des erfindungsgemäßen Verfahrens gewandelte Meldung dann eine Syslog-Meldung.

Die im erfindungsgemäßen Verfahren ausgegebenen Netzwerk-Alarme werden vorzugsweise bei Störungen in Bezug auf die Übertragungsqualität im Kommunikationsnetz und/oder Störungen in Bezug auf Nachbarschaftsbeziehungen im Kommunikationsnetz übertragen. In einer bevorzugten Variante werden Netzwerk-Alarme auch bei sicherheitskritischen Störungen im Kommunikationsnetz, wie sie z.B. bei einem Angriff von unbefugten Dritten auf das Netz auftreten können, generiert. Dabei kann die entsprechende Netzverwaltungsstation um Sicherheits-Funktionalitäten erweitert werden und insbesondere auch die Funktion eines sog. Security-Event-Managers übernehmen.

Neben dem oben beschriebenen Verfahren betrifft die Erfindung ferner ein Kommunikationsnetz für eine industrielle Automatisierungsanlage mit einem oder mehreren Feldgeräten und einem oder mehreren Steuergeräten, wobei das Kommunikationsnetz ein erstes Ethernet-basierendes Protokoll zur Kommunikation in der industriellen Automatisierung verwendet und wobei im Betrieb des Kommunikationsnetzes ein Datenaustausch zwischen einer Anzahl von an einem Automatisierungsprozess beteiligten Feldgeräten und einem der Anzahl von Feldgeräten zugeordneten Steuergerät erfolgt, welches den Automatisierungsprozess steuert. Das Kommunikationsnetz ist dabei derart ausgestaltet, dass im Falle einer von einem Feldgerät erfassten Störung in der Automatisierungsanlage ein Alarm basierend auf dem ersten Protokoll von dem Feldgerät und das dem Feldgerät zugeordnete Steuergerät übermittelt wird, wobei der Alarm als Netzwerk-Alarm klassifiziert wird, falls er durch eine Störung im Kommunikationsnetz verursacht ist. Dabei kann der Alarm wiederum bereits durch das erste Protokoll als Netzwerk-Alarm bei seiner Übermittlung klassifiziert sein. Ebenso kann die Klassifizierung erst durch das Steuergerät vorgenommen werden, das den Alarm empfängt. Das Steuergerät wandelt dabei den als Netzwerk-Alarm klassifizierten Alarm in eine Meldung eines zweiten, zur Verwaltung des Kommunikationsnetzes vorgesehenen Protokolls und sendet die Meldung zur Weiterverarbeitung an eine Netzverwaltungsstation in dem Kommunikationsnetz. Das Kommunikationsnetz ist vorzugsweise derart ausgestaltet, dass es entsprechende Mittel umfasst, mit denen eine oder mehrere der oben beschriebenen Varianten des erfindungsgemäßen Verfahrens durchführbar sind.

Die Erfindung betrifft darüber hinaus ein Steuergerät zur Verwendung in dem oben beschriebenen erfindungsgemäßen Kommunikationsnetz. Das Steuergerät umfasst dabei einen Wandler zur Wandlung von als Netzwerk Alarme klassifizierte Alarme, welche auf dem ersten Protokoll basieren, in Meldungen des zweiten Protokolls, wobei das Steuergerät ferner derart ausgestaltet ist, dass es im Betrieb die gewandelten Meldungen an eine Netzverwaltungsstation in dem Kommunikationsnetz weiterleitet. Entsprechende, das Steuergerät betreffende Merkmale der oben beschriebenen bevorzugten Varianten des erfindungsgemäßen Verfahrens können gegebenenfalls in dieses Steuergerät integriert werden. Insbesondere ist das Steuergerät derart ausgestaltet, dass es empfangene Prozess-Alarme nicht wandelt, sondern direkt an eine Diagnosestation im Kommunikationsnetz weiterleitet.

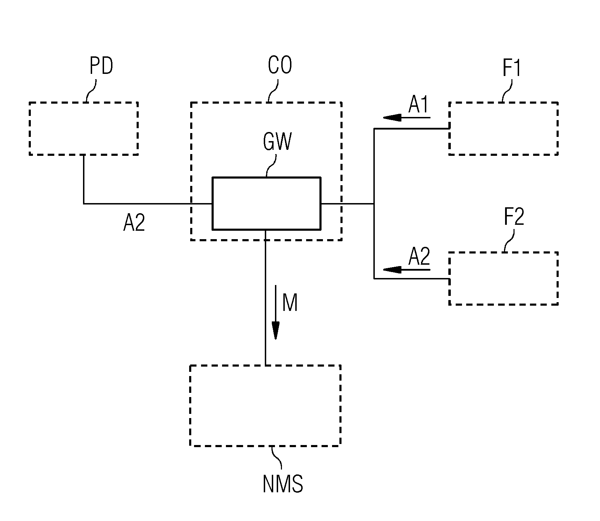

Ein Ausführungsbeispiel der Erfindung wird nachfolgend anhand der beigefügten Fig. 1 detailliert beschrieben. Diese Figur zeigt in schematischer Darstellung ein Kommunikationsnetz, in dem eine Variante des erfindungsgemäßen Verfahrens durchgeführt wird.

Nachfolgend wird das erfindungsgemäße Verfahren basierend auf einem Kommunikationsnetz in der Form eines PROFINET-Netzwerks beschrieben, welches zur Datenkommunikation die Ethernet-Technologie verwendet. Das Verfahren wird dabei basierend auf dem Standard PROFINET IO erläutert, bei dem eine dezentrale Peripherie in der Form von als IO-Devices bezeichneten Feldgeräten an ein den Feldgeräten zugeordnetes Steuergerät in der Form eines IO-Controllers angeschlossen ist. PROFINET und PROFINET IO sind aus der industriellen Automatisierung bekannte Standards, welche die besonderen Anforderungen im Bereich der Automatisierungstechnik berücksichtigen, wie z.B. Echtzeitfähigkeit, sicherheitsgerichtete Kommunikation und Diagnosefähigkeit. Da PROFINET an sich bekannt ist, wird auf eine detaillierte Beschreibung dieses Standards verzichtet. Im Gegensatz zu dem ebenfalls aus dem Stand der Technik bekannten Feldbus Profibus ist in PROFINET die physikalische Trennung zwischen Feldbus zur Netzwerkebene nicht mehr gegeben.

Fig. 1 zeigt eine schematische Darstellung eines Ausschnitts aus einem PROFINET-Netzwerk, welches als dezentrale Peripherie die beiden Feldgeräte bzw. IO-Devices F1 und F2 umfasst, denen ein Steuergerät bzw. IO-Controller CO zugeordnet ist. Das Steuergerät übernimmt im Rahmen des durch die Feldgeräte durchgeführten Automatisierungsprozesses die entsprechende Steuerung der Feldgeräte. Feldgeräte können beliebige, üblicherweise in Automatisierungsanlagen eingesetzte IO-Devices, wie z.B. das Gerät SIMATIC ET200 der SIEMENS AG, umfassen. Die Feldgeräte führen dabei einen vorbestimmten Automatisierungsprozess, wie z.B. einen Prozess im Rahmen einer Fertigung, durch. Ein Feldgerät kann beispielsweise einen Aktor zur Ausführung eines Prozessschritts (z.B. ein Ventil) oder einen Sensor zur Erfassung von entsprechenden Messgrößen währen des Automatisierungsprozesses umfassen. Das Feldgerät steht somit direkt mit dem Automatisierungsprozess in Beziehung. Ebenso kann der IO-Controller einen beliebigen aus dem Stand der Technik bekannten Controller darstellen, wie den SIMATIC S7-400 der SIEMENS AG mit dem Kommunikationsprozessor CP443-1. In der Regel ist der Controller eine speicherprogrammierte Steuerung. In dem Netz der Fig. 1 ist als weitere Komponente eine Prozess-Diagnose-Einheit PD gezeigt, welche als Leitwarte in der Automatisierungsanlage realisiert ist. Diese Leitwarte dient zum Verarbeiten der weiter unten beschriebenen Prozess-Alarme.

In dem Kommunikationsnetz der Fig. 1 ist ferner eine Netzverwaltungsstation NMS in der Form einer SNMP-Management-Station vorgesehen, welche basierend auf dem an sich bekannten Netzwerk-Verwaltungs-Protokoll SNMP (SNMP = Simple Network Management Protocol) die Netzstruktur des Kommunikationsnetzes verwaltet. Die Netzverwaltungsstation hat dabei Zugriff auf sog. MIBs (MIB = Management Information Base) der einzelnen Komponenten im Netzwerk. Diese MIBs stellen Beschreibungsdateien der einzelnen Komponenten dar. Im Rahmen des SNMP-Protokolls gibt es verschiedene Befehle, um Datensätze zwischen der Netzverwaltungsstation und den Komponenten im Netzwerk auszutauschen. Wie im Folgenden dargelegt wird, beruht die hier beschriebene Ausführungsform auf der Verwendung eines SNMP-Traps, bei dem es sich um eine SNMP-Meldung handelt, welche unaufgefordert von einer Komponente des Netzwerks an die SNMP-Management-Station übermittelt wird.

Innerhalb des PROFINET-Protokolls sind verschiedene Arten von sog. Alarmen bekannt, welche bei Störungen im Kommunikationsnetz bzw. im durch die Feldgeräte ausgeführten Automatisierungsprozess von dem entsprechenden Feldgerät ausgegeben werden. In PROFINET wird dabei zwischen sog. Prozess-Alarmen und Netzwerk- bzw. Diagnose-Alarmen unterschieden. Prozess-Alarme sind dabei Meldungen, welche von dem über die Feldgeräte ausgeführten Automatisierungsprozess verursacht sind. Ein Prozess-Alarm kann beispielsweise durch einen Sensor ausgegeben werden, wenn eine Grenztemperatur in der Automatisierungsanlage überschritten wird. Ein Netzwerk- bzw. Diagnose-Alarm betrifft Störungen im Kommunikationsnetz und wird insbesondere dann ausgegeben, wenn eine Störung innerhalb eines Feldgerätes bzw. im Zusammenhang mit der Verbindung zwischen den Feldgeräten auftritt, wie z.B. eine Leitungsunterbrechung zwischen den beiden Feldgeräten F1 und F2. Netzwerk-Alarme können gegebenenfalls auch sog. Security-Ereignisse umfassen. In diesem Fall übernimmt die Netzverwaltungsstation auch die Aufgabe einer sog. SIEM-Station (SIEM = Security Information and Event Management).

Das hier beschriebene Kommunikationsnetz zeichnet sich dadurch aus, dass das in Fig. 1 gezeigte Steuergerät CO ein Gateway GW umfasst, welches die Alarme in Abhängigkeit davon verarbeitet, ob es sich um Netzwerk-Alarme oder Prozess-Alarme handelt. In Fig. 1 ist ein Szenario gezeigt, bei dem vom Feldgerät F1 ein Netzwerk-Alarm A1 an das Steuergerät CO gesendet wird, wohingegen vom Netzgerät F2 ein Prozess-Alarm A2 an das Steuergerät CO gesendet wird. Das Gateway GW arbeitet dabei für den Prozess-Alarm als Weiche, d.h. es leitet den Prozess-Alarm A2 ohne weitere Verarbeitung an die Leitwarte PD weiter. Im Unterschied hierzu wird der Netzwerk-Alarm A1 nicht weitergeleitet, sondern in dem Gateway GW in den bereits oben erwähnten SNMP-Trap M übersetzt, der dann an die SNMP-Management-Station weitergeleitet wird. Man macht sich hierbei die Erkenntnis zunutze, dass Netzwerk-Alarme Informationen betreffen, welche in geeigneter Weise von einer SNMP-Management-Station verarbeitet werden können. Insbesondere kann an der SNMP-Netzwerkmanagement-Station eine geeignete Diagnose der Fehler durchgeführt werden, so dass daraufhin entsprechende Gegenmaßnahmen eingeleitet werden.

Die soeben beschriebene Ausführungsform des erfindungsgemäßen Verfahrens weist den Vorteil auf, dass durch die Umsetzung von Netzwerk-Alarmen in SNMP-Traps die darauf basierenden Netzwerkstörungen an eine Netzverwaltungsstation geleitet werden, welche für die Verarbeitung solcher Störungen ausgelegt ist. Herkömmlicherweise wurden Netzwerk-Alarme an die Leitwarte gegeben, in der eine geeignete Weiterverarbeitung der Alarme jedoch nicht möglich ist, da die Leitwarte im Kommunikationsnetz der Automatisierungsanlage lediglich für Störungen im Rahmen des Automatisierungsprozesses ausgelegt ist und keine geeignete Verarbeitung von Störungen im Rahmen der Netzwerkkommunikation bietet. Im erfindungsgemäßen Verfahren ist es ausreichend, lediglich in einem Steuergerät eine entsprechende Umsetzung der Alarme in SNMP-Traps zu realisieren, ohne dass Veränderungen an den einzelnen Feldgeräten vorgenommen werden müssen. Auf diese Weise kann die Erfindung auf einfache Weise in einem bestehenden PROFINET-Netzwerk integriert werden.

## Patentansprüche

1. Verfahren zum Verarbeiten von Meldungen in einem Kommunikationsnetz einer industriellen Automatisierungsanlage, wobei das Kommunikationsnetz ein erstes Ethernet-basiertes Protokoll zur Kommunikation in der industriellen Automatisierung verwendet und wobei in dem Kommunikationsnetz ein Datenaustausch zwischen einer Anzahl von einen Automatisierungsprozess ausführenden Feldgeräten (F1, F2) und einem der Anzahl von Feldgeräten (F1, F2) zugeordneten Steuergerät (CO) erfolgt, welches den Automatisierungsprozess steuert, bei dem:
a) im Falle einer von einem Feldgerät (F1, F2) erfassten Störung in der Automatisierungsanlage ein Alarm (A1, A2) basierend auf dem ersten Protokoll von dem Feldgerät (F1, F2) an das dem Feldgerät zugeordnete Steuergerät (CO) übermittelt wird, wobei der Alarm (A1, A2) als Netzwerk-Alarm (A1) klassifiziert wird, falls er durch eine Störung im Kommunikationsnetz verursacht ist;
b) das Steuergerät (CO) den als Netzwerk-Alarm (A1) klassifizierten Alarm in eine Meldung (M) eines zweiten, zur Verwaltung des Kommunikationsnetzes vorgesehenen Protokolls wandelt und die Meldung (M) zur Weiterverarbeitung an eine Netzverwaltungsstation (NMS) in dem Kommunikationsnetz weiterleitet.

2. Verfahren nach Anspruch 1, bei dem der in Schritt a) übermittelte Alarm (A1, A2) als Prozess-Alarm (A2) klassifiziert wird, falls er durch eine Störung im Automatisierungsprozess verursacht ist, wobei das Steuergerät (CO) einen Prozess-Alarm (A2) an eine Diagnosestation (PD) im Kommunikationsnetz weiterleitet.

3. Verfahren nach Anspruch 1 oder 2, wobei das erste Protokoll auf dem PROFINET-Standard basiert.

4. Verfahren nach Anspruch 3, bei dem das erste Protokoll auf PROFINET IO basiert, wobei die jeweiligen Feldgeräte (F1, F2) IO-Devices und das Steuergerät (CO) ein IO-Controller ist.

5. Verfahren nach einem der vorhergehenden Ansprüche, bei dem das zweite Protokoll ein Protokoll auf der Anwendungsschicht des OSI-Referenzmodells ist.

6. Verfahren nach einem der vorhergehenden Ansprüche, bei dem das zweite Protokoll das SNMP-Protokoll ist und die gewandelte Meldung (M) ein SNMP-Trap ist, der von dem Steuergerät (CO) an die Netzverwaltungsstation (NMS) in der Form einer SNMP-Management-Station weitergeleitet wird.

7. Verfahren nach einem der vorhergehenden Ansprüche, bei dem die gewandelte Meldung (M) eine Syslog-Meldung ist.

8. Verfahren nach einem der vorhergehenden Ansprüche, bei dem Alarme als Netzwerk-Alarme (A1) klassifiziert werden, falls Störungen in Bezug auf die Übertragungsqualität im Kommunikationsnetz und/oder Störungen in Bezug auf Nachbarschaftsbeziehungen im Kommunikationsnetz auftreten.

9. Verfahren nach einem der vorhergehenden Ansprüche, bei dem Alarme als Netzwerk-Alarme (A2) klassifiziert werden, falls sicherheitskritische Störungen im Kommunikationsnetz auftreten.

10. Kommunikationsnetz für eine industrielle Automatisierungsanlage mit einem oder mehreren Feldgeräten (F1, F2) und einem oder mehreren Steuergeräten (CO), wobei das Kommunikationsnetz ein erstes Ethernet-basiertes Protokoll zur Kommunikation in der industriellen Automatisierung verwendet und wobei im Betrieb des Kommunikationsnetzes ein Datenaustausch zwischen einer Anzahl von einen Automatisierungsprozess ausführenden Feldgeräten (F1, F2) und einem der Anzahl von Feldgeräten (F1, F2) zugeordneten Steuergerät (CO) erfolgt, welches den Automatisierungsprozess steuert, wobei das Kommunikationsnetz derart ausgestaltet ist, dass:
a) im Falle einer von einem Feldgerät (F1, F2) erfassten Störung in der Automatisierungsanlage ein Alarm (A1, A2) basierend auf dem ersten Protokoll von dem Feldgerät (F1, F2) an das dem Feldgerät zugeordnete Steuergerät (CO) übermittelt wird, wobei der Alarm (A1, A2) als Netzwerk-Alarm (A2) klassifiziert wird, falls er durch eine Störung im Kommunikationsnetz verursacht ist;
b) das Steuergerät (CO) wie in A1 in eine Meldung (M) eines zweiten, zur Verwaltung des Kommunikationsnetzes vorgesehenen Protokolls wandelt und die Meldung (M) zur Weiterverarbeitung an eine Netzverwaltungsstation (NMS) in dem Kommunikationsnetz sendet.

11. Kommunikationsnetz nach Anspruch 10, welches derart ausgestaltet ist, dass in dem Kommunikationsnetz ein Verfahren nach einem der Ansprüche 2 bis 9 durchführbar ist.

12. Steuergerät zur Verwendung in einem Kommunikationsnetz nach Anspruch 9 oder 10, umfassend einen Wandler (GW) zur Wandlung von als Netzwerk-Alarme (A1) klassifizierte Alarme, welche auf dem ersten Protokoll basieren, in Meldungen (M) des zweiten Protokolls, wobei das Steuergerät (CO) ferner derart ausgestaltet ist, dass es im Betrieb die gewandelten Meldungen (M) an eine Netzverwaltungsstation (NMS) in dem Kommunikationsnetz weiterleitet.
